# EUROPEAN PATENT SPECIFICATION

(11) **EP 2 579 202 B1**
(45) Date of publication and mention of the grant of the patent: **31.10.2018**
(21) Application number: 11786673.1
(22) Date of filing: 25.05.2011
(51) Int. Cl.: G06Q 50/00, G05B 23/02, G05B 15/02, G06Q 10/06

(54) **ENERGY-SAVING DIAGNOSTIC SYSTEM**
STROMSPARENDES DIAGNOSESYSTEM
SYSTÈME DE DIAGNOSTIC ÉCONOME EN ÉNERGIE

(30) Priority: 25.05.2010 JP 2010119618
(43) Date of publication of application: 10.04.2013
(73) Proprietor: Panasonic Intellectual Property Management Co., Ltd., Osaka-shi, Osaka 540-6207 (JP)
(72) Inventor: SOGO, Tomoya, Osaka 540-6207 (JP); KAZUNO, Hiroki, Osaka 540-6207 (JP)
(74) Representative: Müller-Boré & Partner Patentanwälte PartG mbB
(86) International application number: PCT/JP2011/061971
(87) International publication number: WO 2011/148974

(56) References cited:
- WO-A1-02/090913
- WO-A1-2009/151078
- WO-A1-2009/151078
- CA-A1- 2 729 846
- JP-A- 2003 004 778
- JP-A- 2005 049 039
- US-A1- 2006 167 591
- US-A1- 2010 082 174

## Description

### TECHNICAL FIELD

The present invention relates to an energy-saving diagnostic system that monitors an amount of a resource used by a controlled subject, and more particularly to an energy-saving diagnostic system that monitors a use time of the resource according to respective operations of a plurality of controlled subjects.

### BACKGROUND ART

Various controllers for controlling a plurality of controlled subjects have been proposed in the related art. This type of controller operates the controlled subjects and stops operations of the controlled subjects by outputting a control command to each controlled subject at a predetermined time in accordance with predetermined schedule control information. The controller uses a time-division multiplex transmission method to communicate with the respective controlled subjects, and communicating with the plurality of controlled subjects in sequence, thereby the controller can transmit control commands for operating the controlled subjects and obtain conditions of the controlled subjects.

Further, in recent years, approach for reducing energy resource consumption have been applied more vigorously in units of buildings and facilities. As an example of an approach to reduce energy resource consumption, a period (a use permission period) during which use of electric power, which is a type of resource, is permitted may be set. When a use permission period is set, an energy-saving diagnostic system that monitors an electric power use time of a controlled subject determines whether or not electric power use through an operation of the controlled subject is within the use permission period. And then, the energy-saving diagnostic system displays the electric power use according to whether or not the electric power use is within the use permission period, on the basis of the determination result. Thus, a user can be encouraged to stop using the resource by operating the controlled subject outside the use permission period, and to use the resource within the use permission period.

Further, a controller such as that described above may be employed in this energy-saving diagnostic system. In this configuration, if the resource is used outside the use permission period, the user can modify (change) the schedule control information in accordance with the information displayed by the energy-saving diagnostic system so that the use time is brought within the use permission period. As a result, use of the resource by operating the controlled subject outside the use permission period can be suppressed, enabling a reduction in energy resource consumption. In this instance, if the system can make the user confirm the magnitude of an energy saving effect brought about by modifying the schedule control information when the user modifies the schedule control information using the controller, the user can be further encouraged to save energy.

Meanwhile, a system that enables confirmation of the energy saving effect by: storing data indicating an amount of electric power (an amount of electricity) used by a controlled subject (an electrical device) successively in time series; and displaying results so as to compare the stored data with an amount of used electric power with respect to different periods of identical predetermined period, has been proposed (see Japanese Patent Application Publication No. 2008-202985, for example). In the system described in this Patent Document, after the elapse of a predetermined period following a timing at which a user performs an operation to request the result, an amount of electric power used during a predetermined period before the operation timing and an amount of electric power used during the same predetermined period after the operation timing are compared.

With the configuration of the Patent Document described above, however, although the user can see how the electric power use amount has varied on either side of the timing of the operation requesting the result, the user cannot check variation in the electric power use amount accompanying modification of the schedule control information. In other words, even when the user modifies the schedule control information using the controller, a result displayed in response to a subsequent user operation does not directly express the energy saving effect brought about by modifying the schedule control information.

As a method for confirming the energy saving effect brought about by modifying the schedule control information, the user may: record data indicating the use time of the resource prior to modification of the schedule control information in advance; compare these data with data indicating the use time following modification of the schedule control information; and evaluate a comparison result. With this method, however, the user cannot easily confirm the energy saving effect, and it is therefore difficult to encourage the user to make further efforts to save energy by confirming the effect brought about by modifying the schedule control information.
WO 2009/151078 A1 discloses an energy management system provided with a judging means, a use information display means, a schedule input means, a simulating means, and a predicted value display means. The judging means judges whether an electric appliance has been used according to the power consumption (measurement value) of the electric appliance during a predetermined period every unit time. The use information display means displays whether the electric appliance has been used depending on the result of the judgment by the judging means every unit time. The schedule input means requests the user to input schedule information which defines the operation of the electric appliance during the predetermined period every unit time. The simulating means simulates the power consumption (predicted value) of when the electric appliance has operated according to the schedule information inputted by the schedule input means according to the measurement value. The predicted value display means displays the predicted value calculated by the simulating means.
US 2006/0167591 A1 discloses an Energy and Cost Savings Calculation System that automates the determination of energy and cost savings due to energy conservation measures. The system provides Multi-Variant, Non-Linear (MVNL) load forecasting techniques, energy and cost savings calculations, and Weather Ranking. The load forecasting technique may accept numerous external parameters as input. The technique may use multiple Baselines. It may also use multiple Basic Reference Periods to reduce the load forecasting error. The load forecasting technique may utilize external parameters that are updated on a daily basis, such as dry bulb temperature, dew point temperature, solar condition, and interval meter data. The technique may use Baseline Extensions to perform forecasts and Reference Period Modifications to enhance accuracy. The system may calculate energy and cost savings using Complex Rates and time-of-use (TOU) energy data. The system may rank a plurality of sources providing weather data to identify the most accurate weather data.

### DISCLOSURE OF INVENTION

The present invention has been designed in consideration of the circumstances described above, and an object thereof is to provide an energy-saving diagnostic system with which an energy saving effect brought about by modifying schedule control information can be confirmed easily.

As energy-saving diagnostic system according to the present invention, which has an evaluation mode and monitors a use amount of a resource used by a controlled subject, includes: a control unit that outputs a control command to adjust the use amount in accordance with predetermined schedule control information; an information acquisition unit that obtains information for obtaining the use amount used by the controlled subject, periodically as use information; an information storage unit that stores time series data in which the use information is associated with at least a date on which the use information is obtained; a schedule setting unit that sets the schedule control information; a comparison and evaluation unit that compares use amounts on either side of a reference point when the evaluation mode is set; and a display unit, wherein the comparison and evaluation unit: sets a point in time at which the schedule control information is modified by the schedule setting unit as the reference point; sets the use information obtained over a predetermined period before the reference point as reference data; sets the use information obtained over the same predetermined period after the reference point as performance data; and causes the display unit to display an energy saving effect brought about by modifying the schedule control information on the basis of the performance data and the reference data.

In this energy-saving diagnostic system, the use amount of the resource is preferably a use time of the resource, and the energy-saving diagnostic system preferably monitors the use time of the resource during respective operations of a plurality of the controlled subjects. The control unit preferably controls the operations of the plurality of controlled subjects by outputting the control command to the controlled subjects at a predetermined time in accordance with the predetermined schedule control information. The information acquisition unit preferably obtains information relating to a use condition of the resource as the use information. The information storage unit preferably stores the use information in time series in association with the date on which the use information is obtained. The comparison and evaluation unit preferably compares the use times of the resource on either side of a start point of the evaluation mode when the evaluation mode is set. In other words, the reference point is preferably the start point of the evaluation mode. The comparison and evaluation unit preferably: compares the performance data to the reference data; and causes the display unit to display a comparison result, thereby display the energy saving effect brought about by modifying the schedule control information.

In this energy-saving diagnostic system, the comparison and evaluation unit preferably generates the reference data from the use information stored in the information storage unit so as to exclude use information obtained on a special day on which the use amount differs from normal.

In this energy-saving diagnostic system, the information storage unit preferably stores, together with the use information, special day information indicating whether or not a day on which the use information is obtained is the special day.

In this energy-saving diagnostic system, the comparison and evaluation unit preferably generates the reference data from the use information stored in the information storage unit so as to exclude use information from which data have been lost.

In this energy-saving diagnostic system, the comparison and evaluation unit preferably: calculates a ratio that expresses, as a numerical value, a ratio between the use amount defined in relation to the performance data and the use amount defined in relation to the reference data; and causes the display unit to display the ratio together with an increase/decrease display indicating whether the use amount has increased or decreased on either side of the reference point.

In this energy-saving diagnostic system, the comparison and evaluation unit preferably causes, when the reference data include the use information obtained on a special day on which the use amount differs from normal or the use information from which data have been lost, the display unit to display a warning display, which indicates including an abnormal value, within at least one of the ratio and the increase/decrease display.

In this energy-saving diagnostic system, the comparison and evaluation unit preferably rounds up a value of a least significant digit during the calculation of the ratio, and causes the display unit to display a result as the ratio.

In this energy-saving diagnostic system, the schedule setting unit preferably starts the evaluation mode automatically when the schedule control information is modified in order to reduce the use amount.

In this energy-saving diagnostic system, the comparison and evaluation unit preferably sets, as the reference data, use information obtained in an identical season to a season in which the performance data are obtained.

In this energy-saving diagnostic system, the comparison and evaluation unit preferably has a first threshold and a second threshold that is smaller than the first threshold, and causes the display unit to display different increase/decrease displays according to whether the ratio is larger than the first threshold, within a range of the first threshold and the second threshold, or smaller than the second threshold.

This energy-saving diagnostic system preferably further includes a setting holding area for storing at least a start day of the evaluation mode.

In this energy-saving diagnostic system, the setting holding area preferably also stores a duration of the evaluation mode.

The present invention is advantaged in that an energy saving effect brought about by modifying schedule control information can be confirmed easily.

### BRIEF DESCRIPTION OF DRAWINGS

Fig. 1 shows an energy-saving diagnostic system according to a first embodiment, wherein Fig. 1A is a schematic view showing an overall configuration, and Fig. 1B is a schematic block diagram showing a configuration of a controller;
Fig. 2 is a view showing a display screen of a user terminal according to the first embodiment;
Fig. 3 is a view showing another display screen of the user terminal according to the first embodiment;
Fig. 4 is a view showing a yet another display screen of the user terminal according to the first embodiment;
Fig. 5 is a view showing a calendar used to illustrate the first embodiment;
Fig. 6 is a view showing a calendar used to illustrate the first embodiment;
Fig. 7 is a view showing a calendar used to illustrate the first embodiment;
Fig. 8 is a sequence diagram showing a behavior according to the first embodiment; and
Fig. 9 is a sequence diagram showing a behavior of the controller according to the first embodiment.

### DESCRIPTION OF EMBODIMENTS

The present invention is a system that monitors an amount of a resource used by a controlled subject. In particular, an energy-saving diagnostic system according to this embodiment is a system that monitors a use time of the resource during respective operations of a plurality of controlled subjects. It will be described below about such a case in which the energy-saving diagnostic system is used in a store such as a supermarket and the resource is electric power, as an example.

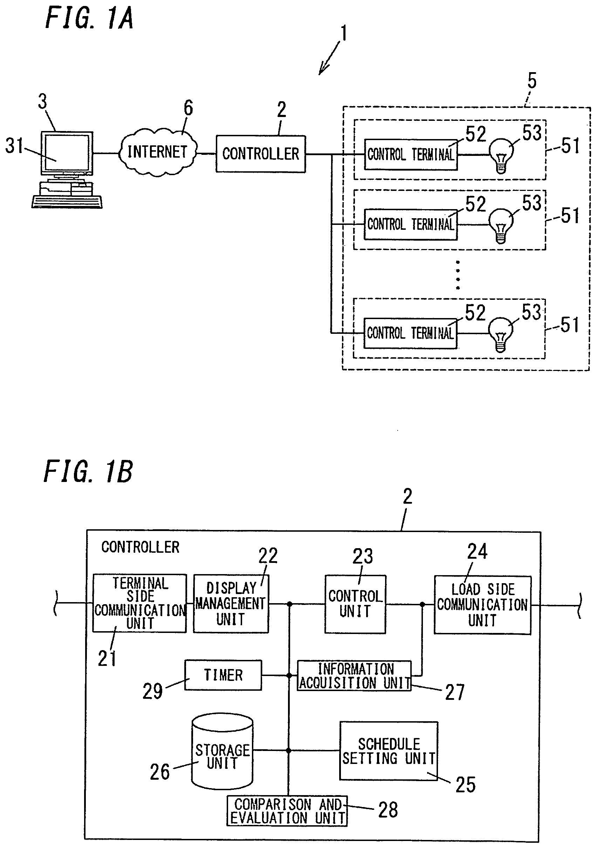

As shown in Fig. 1A, an energy-saving diagnostic system **1** includes a controller **2** and a user terminal **3**. A facility system **5** is connected to the energy-saving diagnostic system **1.**

The facility system **5** is constituted by a plurality of controlled subjects **51.** Each controlled subject **51** is a combination of a control terminal **52** having a relay, and a lighting load (e.g. a lamp) **53.** The lighting load **53** is illuminated and extinguished according to ON and OFF of the relay of the control terminal **52.** Note that here, the lighting load **53** is used as the controlled subject **51** of the facility system **5**, but a load other than the lighting load **53**, for example an air-conditioning facility or the like, may be used as the controlled subject instead.

The user terminal **3** is a computer such as a personal computer managed by a store manager, for example, and includes a display screen **31**. The user terminal **3** displays (as will be described in detail below) illumination conditions of the respective lighting loads **53**, which are gathered by the controller **2**, on the display screen **31** using such as a Web browser or the like.

As shown in Fig. 1B, the controller **2** includes a terminal side communication unit **21**, a display management unit **22**, a control unit **23**, a load side communication unit **24**, a schedule setting unit **25**, a storage unit **26**, an information acquisition unit **27**, a comparison and evaluation unit **28**, and a timer **29**. The controller **2** communicates with the control terminals **52** of the respective controlled subjects **51** using a time-division multiplex transmission method. Note that it may employ another system configuration in which a local control controller (not shown) is connected to the controller **2** and the plurality of control terminals **52** such that the local control controller manages the exchange of data between the controller **2** and the control terminals **52** in a concentrated fashion.

The control unit **23** controls illumination of the lighting loads **53** by ON/OFF controlling the relays of control terminals **52** according to a preset schedule control information. The schedule control information is set in advance in a setting holding area of the storage unit **26**. In this instance, the setting holding area serves as a schedule storage unit. The schedule control information includes a set of (a group of) information in which a specific time, a controlled subject, and control content (switching the relay ON or OFF) are associated with each other. The schedule control information is set by the schedule setting unit **25**, as will be described below.

More specifically, with referring to the schedule control information in the storage unit **26**, when a current time measured by the timer **29** reaches the specific time, the control unit **23** generates a control command for switching the relay of the subject control terminal **52** ON or OFF in accordance with the control content. The control command herein is a command for causing the controlled subject **51** to execute an operation to start or stop using electric power. In other words, the control command is a command for adjusting an amount of electric power used by the controlled subject **51**. Having generated the control command, the control unit **23** transmits the control command to an intended control terminal **52** using the load side communication unit **24**. As a result, an operation of the controlled subject **51** is controlled in accordance with the schedule control information.

The information acquisition unit **27** obtains the ON/OFF conditions of the respective relays periodically from the respective control terminals **52** by communicating periodically with the respective control terminals **52** using the load side communication unit **24**. In other words, the information acquisition unit **27** constantly monitors the ON/OFF conditions of the respective relays by periodically obtaining information indicating the ON/OFF conditions of the respective control terminals **52**.

The ON/OFF condition of the relay of the control terminal **52** is linked to the illumination condition of the lighting load **53**, and therefore, the information acquisition unit **27** monitors the illumination conditions of the respective lighting loads **53** by means of monitoring the ON/OFF conditions of the respective relays. Thus, the information acquisition unit **27** can periodically obtain information relating to an electric power use condition by an operation of each controlled subject **51** (in other words, information from which the amount of power used by each controlled subject **51** can be obtained) as use information, and thereby monitor the electric power use time of each controlled subject **51** (in other words, the amount of electric power used by each controlled subject **51**).

The obtained use information is stored in a data holding area of the storage unit **26** in time series for each controlled subject **51** in association with information indicating an acquisition date and time (or date). In this instance, the data holding area serves as an information storage unit.

Further, the information acquisition unit **27** outputs information indicating the ON/OFF conditions of the respective relays, or in other words the illumination conditions of the respective lighting loads **53**, which is gathered from the respective control terminals **52**, to the display management unit **22**.

The display management unit **22**, following input of the information indicating the ON/OFF conditions of the relays of the respective control terminals **52** from the control unit **23**, generates data for causing the user terminal **3** to display the information indicating the ON/OFF conditions of the respective relays. The display management unit **22** then transmits the generated data to the user terminal **3** using the terminal side communication unit **21**.

The terminal side communication unit **21** is connected to an Internet **6** serving as an external network using Ethernet (registered trademark) to be capable of communicating with the user terminal **3**, which is similarly connected to the Internet **6**. Accordingly, the display management unit **22** displays the generated data on the display screen **31** of the user terminal **3** upon reception of a request transmitted from the user terminal **3** via the Internet **6**. Needless to mention, the terminal side communication unit **21** may be connected to the user terminal **3** directly.

Here, the display management unit **22** is capable of setting a period during which electric power use is permitted in advance as a use permission period, and is capable of causing the user terminal **3** to display the electric power use corresponding to the obtained use information according to whether or not the electric power use is within the use permission period. The use permission period is set in advance for each controlled subject **51** and stored in the setting holding area of the storage unit **26**.

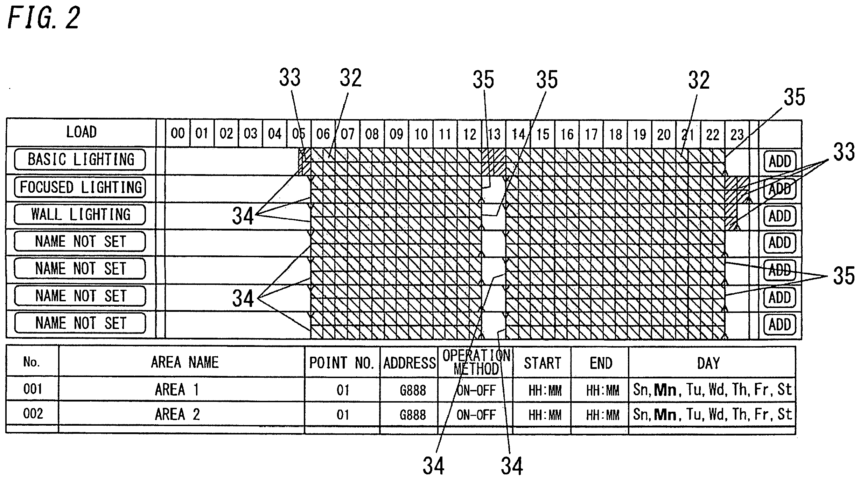

In other words, as shown in Fig. 2, the user terminal **3** uses the use information obtained by the information acquisition unit **27** to display the electric power use time according to whether or not the electric power use time is within the use permission period. Note that in Fig. 2, a code **32** denotes use within the use permission period and a code **33** denotes use outside the use permission period.

The user terminal **3** displays the electric power use condition in predetermined period units (of ten minutes, for example). In a case where the predetermined period is ten minutes, for example, even when electric power is used only for a small amount (one minute, for example) of the ten-minute predetermined period, the display on the user terminal **3** indicates that electric power was used over the entire subject predetermined period. In other words, an identical display is displayed on the user terminal **3** in the location of the subject predetermined period regardless of whether electric power was used only for a short time or electric power was used continuously for ten minutes.

The schedule setting unit **25** has a function for setting the schedule control information, which is used by the control unit **23** to control the controlled subjects **51**. In this embodiment, the schedule setting unit **25** is configured to reflect schedule control information set on the display screen **31** (as shown in Fig. 2) of the user terminal **3** into the storage unit **26**.

More specifically, in Fig. 2, the schedule control information is set in accordance with an ON control point **34** representing a specific time at which a controlled subject **51** is switched ON and an OFF control point **35** representing a specific time at which the controlled subject **51** is switched OFF, for each controlled object **51**. Hence, the control unit **23** controls controlled subject **51** to an ON condition (an illuminated condition) during a period between the ON control point **34** and the OFF control point **35**.

The ON control point **34** and the OFF control point **35** can be slid along a time axis direction over the display screen **31** of the user terminal **3** using a mouse or the like, and the schedule control information is adjusted by adjusting the positions of these control points. When a register button (not shown) on the display screen **31** is pressed, the schedule setting unit **25** updates the schedule control information in the storage unit **26** in accordance with the positions of the ON control points **34** and the OFF control points **35** at that time.

Hence, by providing the schedule setting unit **25**, a user can modify the schedule control information easily on the user terminal **3** while checking whether or not the electric power use is within the use permission period. Note that a method of modifying the schedule control information is not limited to the method described above. For example, such a method may be used in which respective schedule control start and end times are input into a table displayed in a lower section of Fig. 2 using a keyboard.

The energy-saving diagnostic system **1** has an evaluation mode. When the evaluation mode is set, the comparison and evaluation unit **28** compares the electric power use times before and after a start point of the evaluation mode. A comparison result obtained by the comparison and evaluation unit **28** is output to the display management unit **22**, transmitted therefrom to the user terminal **3** using the terminal side communication unit **21**, and displayed on the display screen **31**. In other words, the user terminal **3** functions as a display unit for displaying the comparison result obtained by the comparison and evaluation unit **28**.

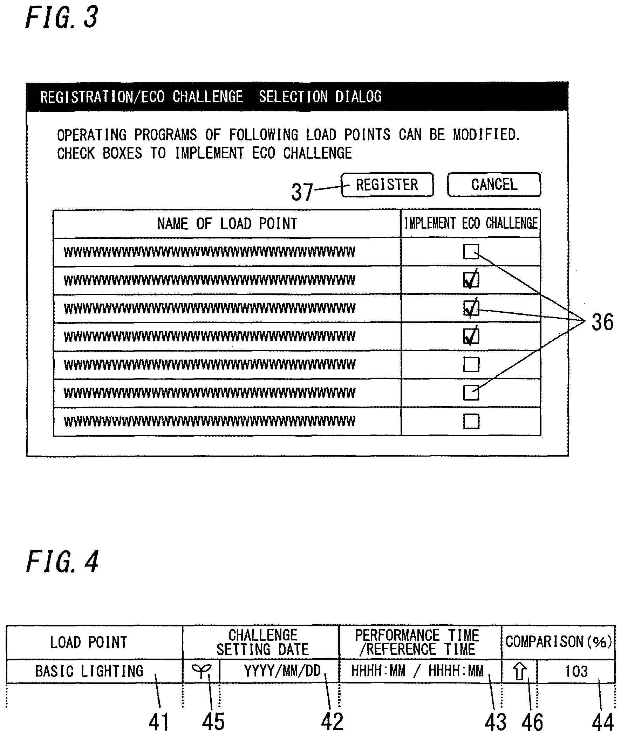

In the energy-saving diagnostic system **1** according to this embodiment, the comparison and evaluation unit **28** sets a point in time at which the schedule control information is modified by the schedule setting unit **25** as a start point of the evaluation mode (a reference point). More specifically, when the schedule control information is modified by adjusting the positions of the ON control points **34** and the OFF control points **35** on the display screen **31** and pressing the register button, the display management unit **22** displays a dialog such as that shown in Fig. 3 on the display screen **31**.

The dialog shown in Fig. 3 is a screen for confirming whether or not to implement the evaluation mode (also referred to as an "eco challenge" hereafter). The dialog includes check boxes **36** for confirming whether or not to implement the evaluation mode in relation to each controlled subject (name of load point) **51**. When, at this time, a register button **37** is pressed in a condition where a check has been input into at least one of the check boxes **36**, the comparison and evaluation unit **28** starts the evaluation mode (the eco challenge) in relation to the checked controlled subject **51**. The start date and time of the evaluation mode is stored in the setting holding area of the storage unit **26**.

When the evaluation mode starts, the comparison and evaluation unit **28** defines "use information obtained over a predetermined period (units of days, weeks, months, or years, for example) before the start point of the evaluation mode" as reference data, defines "use information obtained over the same predetermined period after the start point" as performance data, and compares the performance data with the reference data. In other words, in the evaluation mode according to this embodiment, "use information obtained over the predetermined period before the point at which the schedule control information was modified (i.e. the reference point)" is set as the reference data, "use information obtained over the same predetermined period after the point at which the schedule control information was modified" is set as the performance data, and the performance data is compared with the reference data. Here, the comparison and evaluation unit **28** reads out the use information (where the use information is stored in time series) obtained over a period serving as the reference data and the use information obtained over a period serving as the performance data from the data holding area of the storage unit **26**, and sets the read use information as the reference data and the performance data, respectively.

For example, when the predetermined period for the reference data in the evaluation mode is set at one week, the comparison and evaluation unit **28** sets use information obtained over a single week extending from one week prior to the start day of the evaluation mode to the day before the start day of the evaluation mode (in other words, a predetermined period that is identical in length to the predetermined period for obtaining the reference data) as the reference data. In this case, the comparison and evaluation unit **28** sets use information obtained over a single week starting at a day after the start day of the evaluation mode as the performance data, compares the performance data to the reference data, and displays the comparison result on the user terminal **3**. In other words, the comparison and evaluation unit **28** causes the user terminal **3** to display an energy saving effect brought about by modifying the schedule control information on the basis of the performance data and the evaluation data.

Accordingly, the user terminal **3** displays, for example, a load point **41** representing the controlled subject **51**, a challenge setting day **42** representing the start day of the evaluation mode, a comparison result (comparison data) **43**, and a ratio **44** for each controlled subject **51** in the form of a table, as shown in Fig. 4. Note that in Fig. 4, the comparison result **43** and so on are displayed in relation to only one controlled subject **51**, but in actuality, the comparison result **43** and so on are displayed similarly for each of the plurality of controlled subjects **51**.

The comparison result **43** is displayed in the form of "performance time/reference time", where the electric power use time corresponding to the reference data is set as the reference time and the electric power use time corresponding to the performance data is set as the performance time. The ratio **44** expresses, as a numerical value, a ratio between the electric power use time represented by the performance data and the electric power use time represented by the reference data. Further, a challenge mark **45** indicating whether or not the evaluation mode has been implemented is displayed beside the challenge setting day **42**, and an increase/decrease display **46** indicating whether the electric power use time has increased or decreased is displayed beside the ratio **44**.

The ratio **44** is calculated by dividing the performance time by the reference time, and expressed here as a percentage (%). In other words, when the performance time decreases relative to the reference time, the ratio **44** takes a smaller value than 100 (%), whereas when the performance time increases relative to the reference time, the ratio **44** takes a larger value than 100 (%).

Here, when calculating the ratio **44**, the comparison and evaluation unit **28** rounds up a value of a least significant digit (in the case of Fig. 4, a first decimal place). Hence, when the performance time is shorter than the reference time, for example when performance time/reference time = 97.5 (%), the displayed ratio **44** becomes 98 (%). The user is thus prevented from thinking that an overly large energy reduction has been achieved. On the other hand, when the performance time is longer than the reference time, for example when performance time/reference time = 103.4 (%), the displayed ratio **44** becomes 104 (%). The user is thus prevented from thinking that the increase in the electric power use time is small. Hence, in comparison with a case where the value of the least significant digit obtained during calculation of the ratio **44** is rounded down or rounded off, the user is prevented from thinking that the energy saving effect is overly large or that the increase in the electric power use time is small. Note that the digit (least significant digit) that is rounded up when calculating the ratio **44** is not limited to the first decimal place, and the value of the least significant digit may be rounded up using a second decimal place or a third decimal place as the least significant digit during calculation of the ratio **44**.

The increase/decrease display **46** expresses the increase or decrease in the electric power use time following the start point of the evaluation mode by varying an orientation of an arrow. Here, thresholds for determining the orientation of the increase/decrease display **46** are set in relation to the ratio **44**. For example, the thresholds are set at ± 3 (%) of 100 (%). In this case, the increase/decrease display **46** takes the form of an upwardly oriented arrow indicating an increase in the electric power use time when the ratio **44** is greater than 103 (%) (a first threshold), and takes the form of a downwardly oriented arrow indicating a reduction in the electric power use time when the ratio **44** is smaller than 97 (%) (a second threshold). When the ratio **44** is within a range of 100 ± 3 (%), the increase/decrease display **46** takes the form of a laterally oriented (rightward) arrow. In other words, the comparison and evaluation unit **28** includes a first threshold and a second threshold that is smaller than the first threshold, and different increase/decrease displays **46** are displayed by the display unit **31** according to whether the ratio **44** is larger than the first threshold, within the range of the first threshold and the second threshold, or smaller than the second threshold. Note that the controller **2** may be configured to be capable of setting the thresholds for determining the orientation of the increase/decrease display **46** as desired in response to operation input from the user terminal **3**.

Hence, by checking the display on the display screen **31** of the user terminal **3**, such as that shown in Fig. 4, the user can check how the electric power use time has varied on either side of the start point of the evaluation mode (between before and after the start point). Here, the start point of the evaluation mode is the point in time at which the schedule control information was modified, and therefore the user can confirm the energy saving effect brought about by modifying the schedule control information. Moreover, the ratio **44** expresses the energy saving effect quantitatively, while the increase/decrease display **46** expresses the energy saving effect qualitatively, and therefore the user can grasp the energy saving effect easily.

Fig. 4 shows an example in which the performance data and the reference data are compared in relation to each controlled subject **51** and the comparison results are displayed for each controlled subject **51**. In another configuration, however, some of controlled subjects **51** are grouped, the performance data and the reference data are compared in relation to each group, and the comparison results are displayed for each group. The groups are set in advance such that a plurality of controlled subjects **51** disposed in an identical area, for example, form one group, and the respective groups are specified by group names ("shop floor area" or the like, for example) attached thereto. Needless to mention, arbitrary groups including desired controlled subjects **51** may be set (formed) in response to operation input from the user terminal **3**.

Note that when the evaluation mode is set a plurality of times in relation to the same controlled subject **51**, the comparison and evaluation unit **28** compares the electric power use times on either side of the start point of the latest evaluation mode.

Next, a relationship between the reference data and the performance data compared by the comparison and evaluation unit **28** will be described in detail.

Typically (Conventionally), when comparing electric power use times obtained over a single week, "the electric power use time obtained over a week extending from one week prior to a day on which the comparison result is viewed to a day before the viewing day" is set as the performance data, "the electric power use time over a previous week thereto" is set as the reference data, and the two electric power use times are compared.

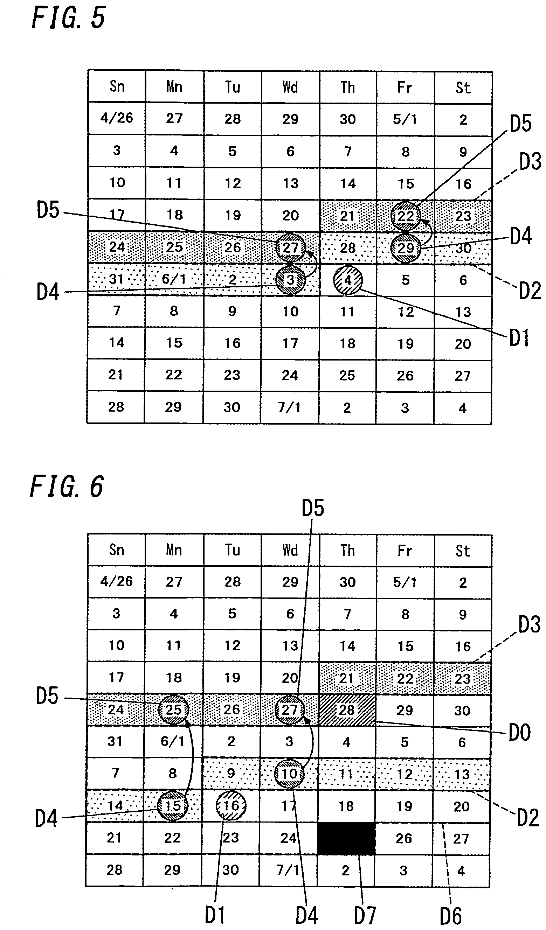

More specifically, as shown in Fig. 5, if a comparison result viewing day **D1** is June 4 and therefore a week extending from May 28 to June 3 serves as a performance data acquisition period **D2**, a previous week thereto, i.e. a week extending from May 21 to May 27, serves as a reference data acquisition period **D3**. Likewise, in a case where comparing electric power use times obtained over a single day, if a performance data acquisition period **D4** is set at June 3, a reference data acquisition period **D5** will be one week previous thereto, i.e. May **27**, and if the performance data acquisition period **D4** is set at May 29, the reference data acquisition period **D5** will be May 22.

In contrast, in this embodiment, in a case where electric power use times obtained over a single week are compared, the comparison and evaluation unit **28** sets the electric power use time obtained over a single week extending from one week prior to the start day of the evaluation mode to a day before the start day of the evaluation mode as the reference data, regardless of the day on which the comparison result (see Fig. 4) is viewed.

More specifically, as shown in Fig. 6, if an evaluation mode start day **D0** is May 28, the week previous to the start day **D0**, i.e. a week extending from May 21 to May 27, is set as the reference data acquisition period **D3** irrespective of a comparison result viewing day **D1**. And then, if the comparison result viewing day **D1** is June 16 (i.e. the comparison result is viewed at June 16), the week previous thereto, i.e. June 9 to June 15, is set as the performance data acquisition period **D2**. Likewise, in a case where comparing electric power use times obtained over a single day, if the performance data acquisition period **D4** is set at June 10, the reference data acquisition period **D5** will be the same day of the week as June 10 before the evaluation mode start day (May 28) **D0**, i.e. May 27, and if the performance data acquisition period **D4** is set at June 15, the reference data acquisition period **D5** will be the same day of the week as June 15 before the evaluation mode start day (May 28) **D0**, i.e. May 25.

Note that a length of an evaluation mode duration **D6** is set in advance, and in the example of Fig. 6, June 25, which is four weeks after the evaluation mode start day **D0**, is set as an evaluation mode end day **D7**. The comparison and evaluation unit **28** is capable of setting an arbitrary period within the evaluation mode duration **D6** as the performance data acquisition period. The length of the evaluation mode duration **D6** is stored in the setting holding area of the storage unit **26**, for example. In this embodiment, the length of the evaluation mode duration **D6** is set in advance, and therefore a situation in which the reference data acquisition period and the performance data acquisition period are too far removed from each other can be avoided. In other words, a situation in which the user does not modify the schedule control information for a long time such that the reference data acquisition period differs greatly from the performance data acquisition period, for example, can be avoided. Note that when the evaluation mode end day **D7** arrives, the comparison and evaluation unit **28** may display a dialog on the display screen **31** (not shown) for notifying the user that the end day has arrived.

The length of the evaluation mode duration **D6** is set to be shorter than a number of days' worth of use information that can be stored in the data holding area of the storage unit **26**. In this instance, a configuration in which the user sets the length of the evaluation mode duration **D6** through the user terminal **3** may be employed.

The comparison and evaluation unit **28** may be configured: to operate according to rules such as those shown in Fig. 6 when the evaluation mode is set; and to operate in a normal mode, in which the reference data and performance data are generated according to typical rules such as those shown in Fig. 5, when the evaluation mode is not set. In this case, the user can choose to operate the comparison and evaluation unit **28** in either the evaluation mode or the normal mode by adding and removing checks to and from the check boxes **36** of the dialog shown in Fig. 3 when modifying the schedule control information.

Incidentally, if the use information serving as the reference data includes use information obtained on a special day (such as a store holiday, a day on which opening hours differ from normal opening hours, or the like) or use information from which data have been lost, a reliability of the reference data decreases. Data loss may occur due to a communication error between the controller **2** and the control terminal **52** or a system stoppage caused by a power cut or the like, for example. In other words, an electric power use time of a special day or a day on which data were lost differs greatly from a normal electric power use time, and therefore the reference data are preferably generated so as to exclude use information obtained on a special day or during a period in which data were lost.

Hence, in this embodiment, the comparison and evaluation unit **28** generates the reference data from the use information stored in the storage unit **26** so as to exclude use information obtained on a special day and use information from which data have been lost. More specifically, if an intended date for obtaining the use information of the reference data (to be referred to hereafter as a "default day") is a special day or a day on which data were lost, the comparison and evaluation unit **28** obtains the reference data from a day one week before the default day. If the day one week before the default day is also a special day or a day on which data were lost, the comparison and evaluation unit **28** further moves back in one week, and obtains the reference data from a day two weeks before the default day.

By performing a similar operation repeatedly up to a predetermined upper limit number of times, the comparison and evaluation unit **28** generates reference data excluding use information obtained on special days and days on which data were lost. Note that the upper limit number of repeated operations is determined based on the number of days' worth of use information that can be stored in the data holding area of the storage unit **26**.

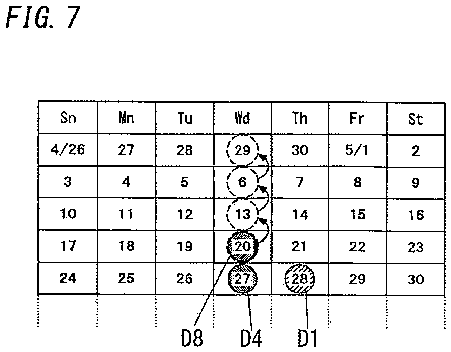

As shown in Fig. 7, for example, if the comparison result viewing day **D1** is May 28, the previous day thereto, i.e. May 27, is the performance data acquisition period **D4**, and the evaluation mode start day (not shown in Fig. 7) is between May 21 and May 26, a day one week before May 27, i.e. May 20, serves as a default day **D8**. And then, if the default day **D8** is a special day or a day on which data were lost, the comparison and evaluation unit **28** sets the reference data using the use information obtained on a day one week before the default day **D8**, i.e. May 13. If May 13 is also a special day or a day on which data were lost, the comparison and evaluation unit **28** obtains the reference data by moving back successively in one week units to May 6 and April 29.

If all of the days to which the comparison and evaluation unit **28** moves back from the default day are special days up to the upper limit number of operations, however, the comparison and evaluation unit **28** sets the use information of the default day as the reference data, and sets a special day flag indicating that the reference data are constituted by information obtained on a special day. Further, when all of the days to which the comparison and evaluation unit **28** moves back from the default day are days on which data were lost up to the upper limit number of operations, the comparison and evaluation unit **28** determines that a subject day does not exist, and sets an error flag without generating the reference data. Moreover, when all of the days to which the comparison and evaluation unit **28** moves back from the default day are special days or days on which data were lost up to the upper limit number of operations, the comparison and evaluation unit **28** sets the use information obtained on the special day least moved from the default day as the reference data, and sets the special day flag indicating that the reference data are constituted by information obtained on a special day.

When the special day flag or the error flag is set, the comparison and evaluation unit **28** causes the user terminal **3** to display a warning display, which informs a state of including an abnormal value, within (together with) at least one of the ratio **44** and the increase/decrease display **46.** More specifically, the comparison and evaluation unit **28** displays the warning display by displaying the ratio **44** and the increase/decrease display **46** in a different color to normal, or displaying a "-" mark. In so doing, a situation in which the user uses data exhibiting low reliability as is and thereby misinterprets the energy saving effect brought about by modifying the schedule control information can be avoided.

Note that the comparison and evaluation unit **28** is not limited to a configuration whereby the reference data are generated so as to exclude both use information obtained on special days and use information from which data have been lost, and may be configured to generate the reference data so as to exclude either use information obtained on special days or use information from which data have been lost.

Further, in this embodiment, special day information indicating whether or not the day on which the information acquisition unit **27** obtained the use information was a special day is stored together with the use information in the data holding area of the storage unit **26**. In so doing, the comparison and evaluation unit **28** can determine from the special day information stored in the storage unit **26** whether or not the use information acquisition day was a special day, and as a result, processing for generating the reference data so as to exclude use information obtained on special days is simplified.

Here, calendar information in which special days are associated with dates and days of the week is stored in advance in the setting holding area of the storage unit **26**. The comparison and evaluation unit **28** can therefore determine whether or not the date corresponding to the use information was a special day using the calendar information. By determining whether or not the date corresponding to the use information was a special day using the special day information stored in the storage unit **26**, the comparison and evaluation unit **28** can determine whether or not the date corresponding to the use information was a special day correctly even when the calendar information is modified. For example, if the store holiday was previously the tenth of each month but is modified to the twentieth of each month, the comparison and evaluation unit **28** can determine a special day correctly from the corresponding special day information even in relation to use information obtained on the tenth prior to modification of the holiday.

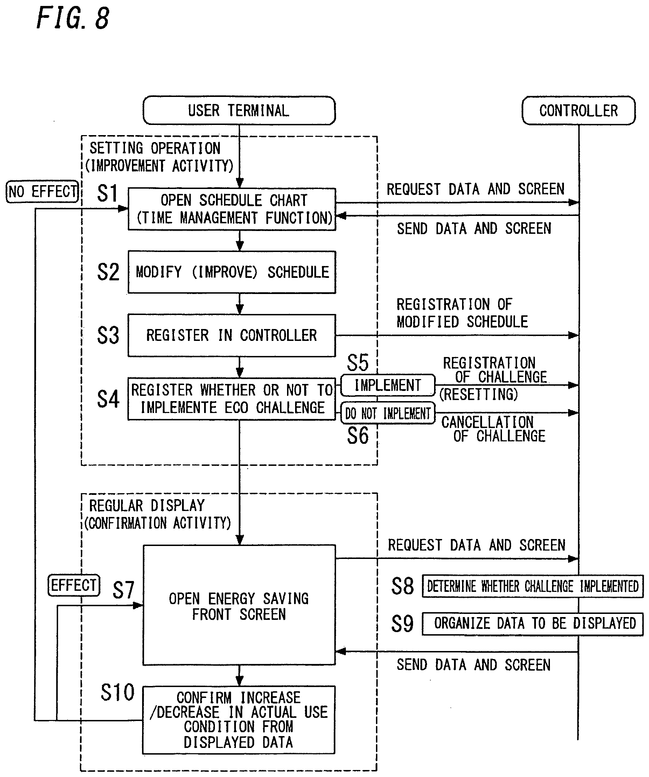

Next, an operation of the energy-saving diagnostic system **1** according to this embodiment will be described with reference to Fig. 8.

First, the user terminal **3** receives operation input from the user, and in accordance therewith displays a schedule chart (see Fig. 2) including the ON control points **34** and the OFF control points **35** of the schedule control information on the display screen **31** (**S1**). At this time, the user terminal **3** requests data for displaying such a chart from the controller **2**, and receives a response from the controller **2.**

While the schedule chart is displayed, the user terminal **3** receives operation input from the user, and in accordance therewith modifies (improves) the schedule control information (**S2**) and registers the modification by transmitting the content of the modification in the controller **2** (**S3**). At this time, the user terminal 3 displays a dialog (see Fig. 3) to cause the user to choose whether or not to implement the eco challenge (the evaluation mode), and transmits a result to the controller **2** (**S4**).

When the user chooses to implement the eco challenge (**S5**), a registration setting command for starting the eco challenge is transmitted from the user terminal **3** to the controller **2**. When the user chooses not to implement the eco challenge (**S6**), a cancellation setting command for terminating the eco challenge is transmitted from the user terminal **3** to the controller **2**.

Then, the user terminal **3** receives operation input from the user, and in accordance therewith displays an energy saving front screen showing the comparison results obtained by the comparison and evaluation unit **28** in the eco challenge, such as that shown in Fig. 4, on the display screen **31** (**S7**). At this time, the user terminal **3** requests data for displaying such a screen from the controller **2**, and receives a response from the controller **2**. The controller **2** receives the data request from the user terminal **3**, determines whether or not the eco challenge has been implemented in relation to each controlled subject **51** (**S8**), and organizes the data to be displayed on the user terminal **3** (**S9**).

Thus, by checking the comparison results obtained by the comparison and evaluation unit **28** in the eco challenge on the display screen **31** of the user terminal **3**, the user can confirm the energy saving effect brought about by modifying the schedule control information (**S10**). Note that when an energy saving effect is obtained, the schedule control information may be used as is, but when an energy saving effect is not obtained, the schedule control information is preferably modified further by returning to the processing of **S1**.

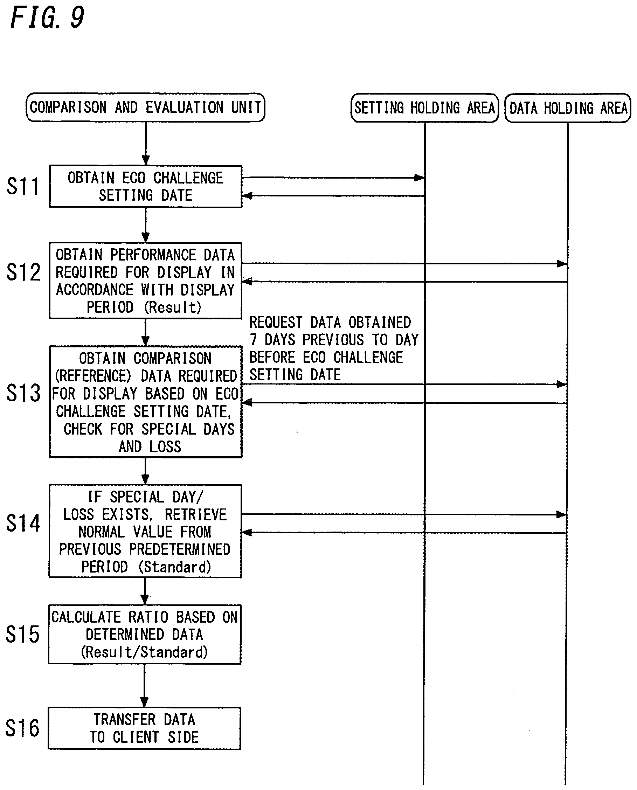

Next, the processing of **S8** and **S9**, performed by the controller **2** upon reception of the data request from the user terminal **3**, will be described in detail with reference to Fig. 9.

First, the comparison and evaluation unit **28** reads out the start date of the eco challenge from the setting holding area of the storage unit **26** (**S11**) and reads out the use information to be used as the performance data from the data holding area of the storage unit **26** (**S12**). Further, the comparison and evaluation unit **28** reads out the use information to be used as the reference data from the data holding area of the storage unit **26** on the basis of the start day of the eco challenge (**S13**). At this time, the comparison and evaluation unit **28** checks whether or not the use information to be used as the reference data includes use information obtained on a special day or use information from which data have been lost, and if such use information is included, obtains the reference data from the previous predetermined period (**S14**).

After obtaining the performance data (Result) and the reference data (Standard), the comparison and evaluation unit **28** calculates the ratio (performance data/reference data) between the two (**S15**), and transmits the calculation result to the user terminal **3** (**S16**).

In the energy-saving diagnostic system **1** according to this embodiment having the configuration described above, the comparison and evaluation unit **28** sets a point in time at which the schedule control information is modified as an evaluation mode start point (a reference point), and compares the electric power use times on either side of the schedule control information modification point serving as the evaluation mode start point. In other words, the comparison and evaluation unit **28** uses use information obtained over a predetermined period prior to the schedule control information modification point as the reference data regardless of the comparison result viewing day. Hence, by checking how the electric power use time has varied on either side of the evaluation mode start point on the display screen **31** of the user terminal **3**, the user can easily confirm the energy saving effect brought about by modifying the schedule control information.

Further, the comparison and evaluation unit **28** generates the reference data from the use information stored in the storage unit **26** so as to exclude use information obtained on special days and use information from which data have been lost, and therefore use information that differs greatly from a normal electric power use time is not reflected in the reference data. As a result, the reliability of the reference data increases, leading to an improvement in the reliability of the comparison result obtained by the comparison and evaluation unit **28**.

Incidentally, an example in which the evaluation mode is started when the register button **37** is pressed in a condition where a check has been added to the check box **36** on the dialog shown in Fig. 3 was described in this embodiment, but the energy-saving diagnostic system **1** may be configured to start the evaluation mode automatically. More specifically, when the schedule control information is modified in order to reduce the electric power use time, the schedule setting unit **25** starts the evaluation mode automatically in relation to the controlled subject **51** for which the schedule control information has been modified, without displaying a dialog such as that shown in Fig. 3. In this instance, the case in which the schedule control information is modified in order to reduce the electric power use time includes such cases in which, for example: the ON control point **34** is retarded; the OFF control point **35** is advanced; an OFF period of the controlled subject **51** is increased; and so on.

By starting the evaluation mode automatically in this manner, the user can be caused to acknowledge the energy saving effect brought about by modifying the schedule control information unconsciously when the schedule control information is modified in order to reduce the electric power use time.

Further, the comparison and evaluation unit **28** may be configured to obtain the reference data from a period belonging to the same season as the date on which the performance data are obtained. In so doing, the energy saving effect brought about by modifying the schedule control information can be accurately determined by the comparison and evaluation unit **28** in relation to a load that varies in operation time according to the season, such as an outdoor lighting load, for example.

A configuration in which the control terminal **52** ON/OFF controls the lighting load **53** was described in the above embodiment, but the present invention may also be applied to a configuration in which the control terminal **52** adjusts a light amount of the lighting load **53**. In this case, the schedule control information includes information relating to the light amount emitted by the lighting load **53** in an ON condition in addition to the information relating to the ON control point **34** and the OFF control point **35**. Further, the schedule setting unit **25** has a function for setting the light amount emitted by the lighting load **53** in the ON condition. The control unit **23** generates a control command which including the information relating to the light amount of the lighting load **53** in accordance with the schedule control information set by the schedule setting unit **25**. Meanwhile, the control terminal **52**, for example, includes a measurement unit that measures the amount of electric power used by the lighting load **53**. The information acquisition unit **27** periodically obtains the amount of used electric power, measured by the measurement unit of the control terminal **52**, as the use information. The obtained use information is stored as time series data in the data holding area serving as the information storage unit of the storage unit **26**. The comparison and evaluation unit **28** compares the reference data and the performance data on the basis of the use information, and displays the comparison result on the display screen **31** of the user terminal **3**. In this case, the comparison and evaluation unit **28** is configured to compare an amount of used electric power corresponding to the performance data with an amount of used electric power corresponding to the reference data.

Note that the resource serving as the monitoring subject of the energy-saving diagnostic system **1** is not limited to electric power (electricity), and may be water, gas, or heat. When the resource is water or gas, for example, water pipes and gas pipes for supplying water and gas are disposed in each area of a building such as an office or a store, and valves for opening and closing water and gas flow passages are disposed in the water pipes and gas pipes. By monitoring an open/closed condition of the valves, a use condition (in use/not in use) of the water and gas can be monitored. Further, when the resource is heat, a valve for opening and closing a heating medium flow passage is provided, and by monitoring an open/closed condition of the valve, a use condition (in use/not in use) of the heat can be monitored.

## Claims

1. A diagnostic system for diagnosing energy saving (1) that has an evaluation mode and is configured to monitor a use amount of an energy resource selected from a group consisting of electricity and gas used by a load (51), the diagnostic system comprising:
a control unit (23) configured to output a control command to adjust the use amount in accordance with predetermined schedule control information;
an information acquisition unit (27) configured to, periodically, obtain information for obtaining the use amount used by said load (51) as use information;
an information storage unit (26) configured to store time series data in which the use information is associated with at least a date on which the use information is obtained;
a schedule setting unit (25) configured to set the schedule control information; and
a display unit (3),
**characterized by**
a comparison and evaluation unit (28) configured:
to compare the use amounts on either side of a reference point when the evaluation mode is set;
to set a point in time at which the schedule control information is modified by said schedule setting unit (25) as the reference point;
to read out the use information obtained over a predetermined period before the reference point from the data holding area of the information storage unit (26) where the use information is stored in time series and to set the read use information as reference data, wherein the reference data are generated so as to exclude use information obtained on a special day on which the use amount differs from normal, the special day being a store holiday or a day on which opening hours differ from normal opening hours, wherein if the predetermined period before the reference point includes the special day, the use information is obtained over another predetermined period a unit of time before the predetermined period;
to read out the use information obtained over the aforementioned predetermined period after the reference point from the data holding area of the information storage unit (26) where the use information is stored in time series and to set the read use information as performance data; and
to cause said display unit (3) to display an energy saving effect brought about by modifying the schedule control information on the basis of the performance data and the reference data.

2. The diagnostic system for diagnosing energy saving (1) according to claim 1, wherein
the use amount of the energy resource is a use time of the energy resource, thereby said diagnostic system for diagnosing energy saving (1) is configured to monitor the use time of the energy resource during respective operations of a plurality of said loads (51),
said control unit (23) is configured to control the operations of said plurality of loads (51) by outputting the control command to said loads (51) at a predetermined time in accordance with the predetermined schedule control information,
said information acquisition unit (27) is configured to obtain information relating to a use condition of the energy resource as the use information,
said information storage unit (26) is configured to store the use information in time series in association with the date on which the use information is obtained,
said comparison and evaluation unit (28) is configured to compare the use times of the energy resource on either side of a start point of the evaluation mode when the evaluation mode is set, or in other words the reference point is the start point of the evaluation mode, and
said comparison and evaluation unit (28) is configured: to compare the performance data to the reference data; and to cause said display unit (3) to display a comparison result, thereby display the energy saving effect brought about by modifying the schedule control information.

3. The diagnostic system for diagnosing energy saving (1) according to claim 1, wherein said information storage unit (26) is configured to store, together with the use information, special day information indicating whether or not a day on which the use information is obtained is the special day.

4. The diagnostic system for diagnosing energy saving (1) according to any one of claims 1 to 3, wherein said comparison and evaluation unit (28) is configured to generate the reference data from the use information stored in said information storage unit (26) so as to exclude use information from which data have been lost.

5. The diagnostic system for diagnosing energy saving (1) according to any one of claims 1 to 4, wherein said comparison and evaluation unit (28) is configured: to calculate a ratio that expresses, as a numerical value, a ratio between the use amount represented by the performance data and the use amount represented by the reference data; and to cause said display unit (3) to display the ratio (44) together with an increase/decrease display (46) indicating whether the use amount has increased or decreased on either side of the reference point.

6. The diagnostic system for diagnosing energy saving (1) according to any one of claims 1 to 5, wherein said comparison and evaluation unit (28) is configured to set, as the reference data, use information obtained in an identical season to a season in which the performance data are obtained.

7. The diagnostic system for diagnosing energy saving (1) according to claim 5, wherein said comparison and evaluation unit (28) has a first threshold and a second threshold that is smaller than the first threshold, and is configured to cause said display unit (3) to display different increase/decrease displays (46) according to whether the ratio is larger than the first threshold, within a range of the first threshold and the second threshold, or smaller than the second threshold.

8. The diagnostic system for diagnosing energy saving (1) according to claim 1, further comprising a setting holding area (26) for storing at least a start day of the evaluation mode.

9. The diagnostic system for diagnosing energy saving (1) according to claim 8, wherein the setting holding area (26) is configured to also store a duration of the evaluation mode.

## Patentansprüche

1. Diagnosesystem zum Diagnostizieren von Energieeinsparung (1), das einen Auswertemodus aufweist und konfiguriert ist, eine Nutzungsmenge einer Energieressource zu überwachen, die aus einer Gruppe bestehend aus Elektrizität und Gas ausgewählt ist, die von einer Last bzw. einem Verbraucher (51) verwendet werden, wobei das Diagnosesystem umfasst:
eine Steuer- bzw. Regeleinheit (23), die konfiguriert ist, einen Steuer- bzw. Regelbefehl auszugeben, um den Nutzungsmenge gemäß vorbestimmter Zeitplankontrollinformationen einzustellen;
eine Informationserfassungseinheit (27), die konfiguriert ist, periodisch Informationen zum Erhalten der Nutzungsmenge, die von der Last (51) verwendet wird, als Nutzungsinformationen zu erhalten;
eine Informationsspeichereinheit (26), die konfiguriert ist, Zeitreihendaten zu speichern, in denen die Nutzungsinformationen mit zumindest einem Datum verknüpft sind, an dem die Nutzungsinformationen erhalten werden;
eine Zeitplanfestlegungseinheit (25), die konfiguriert ist, die Zeitplankontrollinformationen festzulegen; und
eine Anzeigeeinheit (3),
**gekennzeichnet durch**
eine Vergleichs- und Auswerteeinheit (28), die konfiguriert ist:
die Nutzungsmengen auf jeder Seite eines Bezugspunkts zu vergleichen, wenn der Auswertemodus eingestellt ist;
einen Zeitpunkt, zu dem die Zeitplankontrollinformationen von der Zeitplanfestlegungseinheit (25) modifiziert werden, als Bezugspunkt festzulegen;
die über einen vorbestimmten Zeitraum vor dem Bezugspunkt erhaltenen Nutzungsinformationen aus dem Datenhaltebereich der Informationsspeichereinheit (26) auszulesen, wo die Nutzungsinformationen in Zeitreihen gespeichert sind, und die ausgelesenen Nutzungsinformationen als Referenzdaten festzulegen, wobei der Referenzdaten generiert werden, um Nutzungsinformationen auszuschließen, die an einem besonderen Tag erhalten werden, an dem sich die Nutzungsmenge von der normalen unterscheidet, wobei der besondere Tag ein Ladeschließtag oder ein Tag ist, an dem sich die Öffnungszeiten von normalen Öffnungszeiten unterscheiden, wobei, wenn der vorbestimmte Zeitraum vor dem Bezugspunkt den besonderen Tag einschließt, die Nutzungsinformationen über einen weiteren vorbestimmten Zeitraum eine Zeiteinheit vor der vorbestimmten Zeitraum erhalten werden;
die Nutzungsinformationen, die über den vorher erwähnten vorbestimmten Zeitraum nach dem Bezugspunkt erhalten werden, aus dem Datenhaltebereich der Informationsspeichereinheit (26) auszulesen, wo die Nutzungsinformationen in Zeitserien gespeichert sind, und die ausgelesenen Nutzungsinformationen als Leistungsdaten festzulegen; und
die Anzeigeeinheit (3) zu veranlassen, einen Energiespareffekt anzuzeigen, der durch Modifizieren der Zeitplankontrollinformationen auf Basis der Leistungsdaten und der Referenzdaten bewirkt wird.

2. Diagnosesystem zum Diagnostizieren von Energieeinsparung (1) nach Anspruch 1, wobei
die Nutzungsmenge der Energieressource eine Nutzungszeit der Energieressource ist, wodurch das Diagnosesystem zum Diagnostizieren von Energieeinsparung (1) konfiguriert ist, die Nutzungszeit der Energieressource während jeweiliger Operationen einer Mehrzahl der Lasten (51) zu überwachen,
die Steuer- bzw. Regeleinheit (23) konfiguriert ist, die Operationen der Mehrzahl von Lasten (51) durch Ausgeben des Steuerbefehls an die Lasten (51) zu einer vorbestimmten Zeit in Übereinstimmung mit den vorbestimmten Zeitplankontrollinformationen zu steuern bzw. zu regeln,
die Informationserfassungseinheit (27) konfiguriert ist, Informationen, die sich auf eine Nutzungsbedingung der Energieressource beziehen, als die Nutzungsinformationen zu erhalten,
die Informationsspeichereinheit (26) konfiguriert ist, die Nutzungsinformationen in Zeitreihen in Verbindung mit dem Datum zu speichern, an dem die Nutzungsinformationen erhalten werden,
die Vergleichs- und Auswerteeinheit (28) konfiguriert ist, die Nutzungszeiten der Energieressource auf jeder Seite eines Startpunkts des Auswertemodus zu vergleichen, wenn der Auswertemodus eingestellt ist, oder mit anderen Worten der Referenzpunkt der Startpunkt des Auswertemodus ist, und
die Vergleichs- und Auswerteeinheit (28) konfiguriert ist: Leistungsdaten mit den Referenzdaten zu vergleichen; und die Anzeigeeinheit (3) zu veranlassen, ein Vergleichsergebnis anzuzeigen, wodurch der Energiespareffekt angezeigt wird, der durch Modifizieren der Zeitplankontrollinformationen bewirkt wird.

3. Diagnosesystem zum Diagnostizieren von Energieeinsparung (1) nach Anspruch 1, wobei die Informationsspeichereinheit (26) konfiguriert ist, zusammen mit den Nutzungsinformationen spezielle Tagesinformationen zu speichern, die angeben, ob ein Tag, an dem die Informationen erhalten werden, der besondere Tag ist oder nicht erhalten.

4. Diagnosesystem zum Diagnostizieren von Energieeinsparung (1) nach einem der Ansprüche 1 bis 3, wobei die Vergleichs- und Auswerteeinheit (28) konfiguriert ist, die Referenzdaten aus den in der Informationsspeichereinheit (26) gespeicherten Nutzungsinformationen zu generieren, um Nutzungsinformationen auszuschließen, von denen Daten verloren gegangen sind.

5. Diagnosesystem zum Diagnostizieren von Energieeinsparung (1) nach einem der Ansprüche 1 bis 4, wobei die Vergleichs- und Auswerteeinheit (28) konfiguriert ist: ein Verhältnis zu berechnen, das als ein numerischer Wert ein Verhältnis zwischen der Nutzungsmenge, dargestellt durch die Leistungsdaten, und der Nutzungsmenge, dargestellt durch die Referenzdaten, ausdrückt; und die Anzeigeeinheit (3) zu veranlassen, das Verhältnis (44) zusammen mit einer Erhöhungs-/Verringerungsanzeige (46) anzuzeigen, die angibt, ob die Nutzungsmenge auf einer bzw. jeder Seite des Referenzpunkts zugenommen oder abgenommen hat.

6. Diagnosesystem zum Diagnostizieren von Energieeinsparung (1) nach einem der Ansprüche 1 bis 5, wobei die Vergleichs- und Auswerteeinheit (28) konfiguriert ist, als Referenzdaten Nutzungsinformationen festzulegen, die in einer Jahreszeit identisch zu einer Jahreszeit erhalten, in der die Leistungsdaten erhalten werden.

7. Diagnosesystem zum Diagnostizieren von Energieeinsparung (1) nach Anspruch 5, wobei die Vergleichs- und Auswerteeinheit (28) einen ersten Schwellenwert und einen zweiten Schwellenwert aufweist, der kleiner als der erste Schwellenwert ist, und konfiguriert ist, die Anzeigeeinheit (3) zu veranlassen, unterschiedliche Erhöhungs-/Verringerungsanzeigen (46) anzuzeigen, je nachdem, ob das Verhältnis größer als der erste Schwellenwert ist, und zwar innerhalb eines Bereichs des ersten Schwellenwerts und des zweiten Schwellenwerts, oder kleiner als der zweite Schwellenwert ist.

8. Diagnosesystem zum Diagnostizieren von Energieeinsparung (1) nach Anspruch 1, ferner umfassend einen Einstellhaltebereich (26) zum Speichern von zumindest einem Starttag des Auswertemodus.

9. Diagnosesystem zum Diagnostizieren von Energieeinsparung (1) nach Anspruch 8, wobei der Einstellhaltebereich (26) konfiguriert ist, auch eine Dauer des Auswertemodus zu speichern.

## Revendications

1. Système de diagnostic pour diagnostiquer une économie d'énergie (1) qui a un mode d'évaluation et est configuré pour surveiller une quantité d'usage d'une ressource d'énergie sélectionnée parmi un groupe constitué de l'électricité et du gaz utilisée par une charge (51), le système de diagnostic comprenant :
un module de commande (23) configuré pour émettre un ordre de commande pour ajuster la quantité d'usage conformément à des informations de commande de calendrier prédéterminé ;
un module d'acquisition d'informations (27) configuré pour obtenir périodiquement des informations pour obtenir la quantité d'usage utilisée par ladite charge (51) comme informations d'usage ;
un module de stockage d'informations (26) configuré pour stocker des données de série chronologique dans lesquelles les informations d'usage sont associées à au moins une date à laquelle les informations d'usage sont obtenues ;
un module de réglage de calendrier (25) configuré pour régler les informations de commande de calendrier ; et
un module d'affichage (3),
**caractérisé par**
un module de comparaison et d'évaluation (28) configuré :
pour comparer les quantités d'usage d'un côté ou de l'autre d'un point de référence lorsque le mode d'évaluation est réglé ;
pour régler un point dans le temps auquel les informations de commande de calendrier sont modifiées par ledit module de réglage de calendrier (25) comme point de référence ;
pour lire les informations d'usage obtenues sur une période prédéterminée avant le point de référence à partir de la zone d'attente de données du module de stockage d'informations (26) où les informations d'usage sont stockées en série chronologique et pour régler les informations d'usage lues comme données de référence, dans lequel les données de référence sont générées de manière à exclure des informations d'usage obtenues un jour spécial lors duquel la quantité d'usage diffère de la normale, le jour spécial étant un congé des magasins ou un jour lors duquel les heures d'ouverture diffèrent d'heures d'ouverture normales, dans lequel si la période prédéterminée avant le point de référence inclut le jour spécial, les informations d'usage sont obtenues sur une autre période prédéterminée une unité de temps avant la période prédéterminée ;
pour lire les informations d'usage obtenues sur la période prédéterminée susmentionnée après le point de référence à partir de la zone d'attente de données du module de stockage d'informations (26) où les informations d'usage sont stockées en série chronologique et pour régler les informations d'usage lues comme données de performances ; et
pour amener ledit module d'affichage (3) à afficher un effet d'économie d'énergie entraîné en modifiant les informations de commande de calendrier en fonction des données de performances et des données de référence.

2. Système de diagnostic pour diagnostiquer une économie d'énergie (1) selon la revendication 1, dans lequel
la quantité d'usage de la ressource d'énergie est une durée d'usage de la ressource d'énergie, ledit système de diagnostic pour diagnostiquer une économie d'énergie (1) est de ce fait configuré pour surveiller la durée d'usage de la ressource d'énergie au cours d'opérations respectives d'une pluralité desdites charges (51),
ledit module de commande (23) est configuré pour commander les opérations de ladite pluralité de charges (51) en émettant l'ordre de commande vers lesdites charges (51) à un moment prédéterminé conformément aux informations de commande de calendrier prédéterminé,
ledit module d'acquisition d'informations (27) est configuré pour obtenir des informations concernant une condition d'usage de la ressource d'énergie comme informations d'usage,
ledit module de stockage d'informations (26) est configuré pour stocker les informations d'usage en série chronologique en association avec la date à laquelle les informations d'usage sont obtenues,
ledit module de comparaison et d'évaluation (28) est configuré pour comparer les durées d'usage de la ressource d'énergie d'un côté ou de l'autre d'un point de départ du mode d'évaluation lorsque le mode d'évaluation est réglé, ou en d'autres termes, le point de référence est le point de départ du mode d'évaluation, et
ledit module de comparaison et d'évaluation (28) est configuré : pour comparer les données de performances aux données de référence ; et pour amener ledit module d'affichage (3) à afficher un résultat de comparaison, afficher de ce fait l'effet d'économie d'énergie entraîné en modifiant les informations de commande de calendrier.

3. Système de diagnostic pour diagnostiquer une économie d'énergie (1) selon la revendication 1, dans lequel ledit module de stockage d'informations (26) est configuré pour stocker, avec les informations d'usage, des informations de jour spécial indiquant si un jour lors duquel les informations d'usage sont obtenues est le jour spécial ou non.

4. Système de diagnostic pour diagnostiquer une économie d'énergie (1) selon l'une quelconque des revendications 1 à 3, dans lequel ledit module de comparaison et d'évaluation (28) est configuré pour générer les données de référence à partir des informations d'usage stockées dans ledit module de stockage d'informations (26) de manière à exclure des informations d'usage desquelles des données ont été perdues.

5. Système de diagnostic pour diagnostiquer une économie d'énergie (1) selon l'une quelconque des revendications 1 à 4, dans lequel ledit module de comparaison et d'évaluation (28) est configuré : pour calculer un rapport qui exprime comme valeur numérique un rapport entre la quantité d'usage représentée par les données de performances et la quantité d'usage représentée par les données de référence ; et pour amener ledit module d'affichage (3) à afficher le rapport (44) avec un affichage d'augmentation/diminution (46) indiquant si la quantité d'usage a augmenté ou diminué d'un côté ou de l'autre du point de référence.

6. Système de diagnostic pour diagnostiquer une économie d'énergie (1) selon l'une quelconque des revendications 1 à 5, dans lequel ledit module de comparaison et d'évaluation (28) est configuré pour régler comme données de référence des informations d'usage obtenues à une saison identique à une saison à laquelle les données de performances sont obtenues.

7. Système de diagnostic pour diagnostiquer une économie d'énergie (1) selon la revendication 5, dans lequel ledit module de comparaison et d'évaluation (28) a un premier seuil et un second seuil qui est inférieur au premier seuil, et est configuré pour amener ledit module d'affichage (3) à afficher différents affichages d'augmentation/diminution (46) en fonction du fait que le rapport soit supérieur au premier seuil, au sein d'une plage du premier seuil et du second seuil, ou inférieur au second seuil.

8. Système de diagnostic pour diagnostiquer une économie d'énergie (1) selon la revendication 1, comprenant en outre une zone d'attente de réglage (26) pour stocker au moins un jour de démarrage du mode d'évaluation.

9. Système de diagnostic pour diagnostiquer une économie d'énergie (1) selon la revendication 8, dans lequel la zone d'attente de réglage (26) est configurée pour également stocker une durée du mode d'évaluation.
